# EUROPÄISCHE PATENTANMELDUNG

(11) **EP 1 790 973 A2**
(43) Veröffentlichungstag der Anmeldung: **30.05.2007**
(21) Anmeldenummer: 07005331.9
(22) Anmeldetag: 10.09.2004
(51) Int. Cl.: G01N 21/47, G01N 21/94, G01N 21/958, A47L 15/42

(54) **Verfahren zur quantitativen Messung von Ablagerungen auf festen Oberflächen**

(62) Teilanmeldung aus: 04021958.6
(71) Anmelder: Cognis IP Management GmbH, 40589 Düsseldorf (DE)
(72) Erfinder: Die Erfindernennung liegt noch nicht vor
(74) Vertreter: Reinhardt, Jürgen

(57) **Zusammenfassung**

Beschrieben wird ein Verfahren zur quantitativen Messung von Ablagerungen auf festen Oberflächen die beim Filming auftreten wobei ein dünner Wasserfilm gleichmäßig abtrocknet, dadurch gekennzeichnet, dass die Oberfläche zur Messung als planer Prüfling (2) ausgebildet ist, vorzugsweise in Form einer rechteckigen oder runden Platte, und mit sichtbarem Licht aus einer Lichtquelle (3a) bestrahlt wird, wobei das von dem Prüfling (2) gestreute Licht von einer Kamera (4) aufgefangen wird und das so gewonnen Bild computergestützte ausgewertet wird.

## Beschreibung

Die vorliegende Erfindung betrifft ein Verfahren zur quantitativen Messung von Ablagerungen auf festen Oberflächen.

Ein wesentlicher Parameter bei der Entwicklung Mitteln für das Geschirrspülen ist die Messung der Klarspülleistung. Dabei soll ermittelt werden, wie groß der Anteil an Ablagerungen auf den Geschirrteilen ist, nachdem diese gespült wurden. Bei den Ablagerungen handelt es sich im wesentlichen um mineralische Verbindungen, insbesondere Ca- und/oder Mg-Salze, aber auch um Tensidrückstände. Hauptsächlich führt aber Kalk zu den für den Anwender unerwünschten Ablagerungen. Um den Anteil dieser Ablagerungen zu verringern enthalten gängige Geschirrspülmittel, insbesondere solche für das automatische Geschirrspülen, in der Regel sogenannte Klarspülmittel. Marktübliche Klarspülmittel stellen üblicherweise Gemische aus schwachschäumenden nichtionischen Tensiden, typischerweise Fettalkoholpolyethylen/polypropylenglykolethern, Lösungsvermittlern (z. B. Cumolsulfonat), organischen Säuren (z. B. Zitronensäure) und Lösungsmitteln (z. B. Ethanol) dar. Die Aufgabe dieser Mittel besteht darin, die Grenzflächenspannung des Wassers so zu beeinflussen, daß es in einem möglichst dünnen, zusammenhängenden Film vom Spülgut ablaufen kann, so daß beim anschließenden Trocknungsvorgang keine Wassertropfen, Streifen oder Filme zurückbleiben. Unterschieden wird zwischen zwei Arten von Ablagerungen. Zum einen wird das sogenannte "Spotting" untersucht, welches durch abtrocknende Wassertropfen entsteht, zum anderen bewertet man das "Filming", das sind Schichten, die durch das Abtrocknen dünner Wasserfilme entstehen. Zur Bewertung werden derzeit Probanden eingesetzt, die visuell bei gereinigten Objekten, z.B. Teller, Gläser, Messer etc. die Parameter "Spotting" und "Filming" bewerten. Dieses Verfahren ist zum einen sehr zeitaufwendig und, da nur vergleichende Bewertungen möglich sind, ist ein Bezug zu anderen Messreihen nicht gegeben.

Es besteht daher ein Bedürfnis, derartige Messung möglichst automatisiert und insbesondere anhand objektiver Parameter durchführen zu können.

Es wurde gefunden, dass durch ein optisches Verfahren, dass die Reflektion bzw. Streuung von Licht auf den Oberflächen von gereinigten Flächen misst die oben bezeichnete Aufgabe gelöst werden kann.

Gegenstand der vorliegenden Anmeldung ist in einer ersten Ausführungsform ein Verfahren zur quantitativen Messung von Ablagerungen, vorzugsweise von Kalkablagerungen, auf Oberflächen, wobei die zu messende Oberfläche zur Messung als flächiger Prüfling ausgebildet ist, vorzugsweise in Form einer rechteckigen oder runden Platte, und mit sichtbarem Licht aus einer Lichtquelle bestrahlt wird, wobei das von dem Prüfling reflektierte und/oder gestreute Licht von einer Kamera aufgefangen wird und das so erhaltene Bild anschließend computergestützt ausgewertet wird.

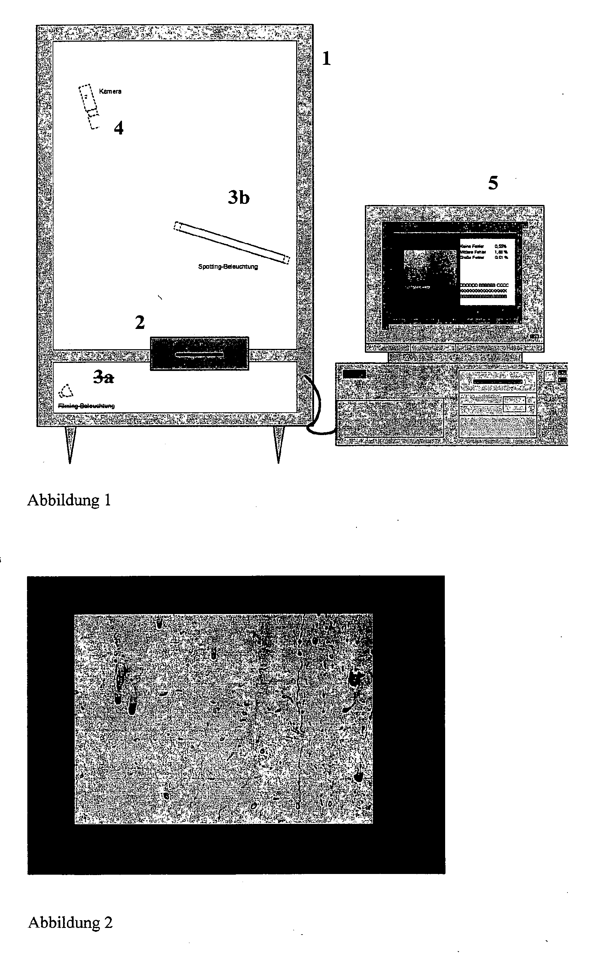

In der Abbildung 1 sind die Elemente einer Vorrichtung zur Durchführung des Verfahrens dargestellt. Eine solche Vorrichtung ist ebenfalls Gegenstand der vorliegenden Anmeldung. Das Verfahren kann vorzugsweise in einer lichtdichten Messbox (1) durchgeführt werden, in der mittig ein Prüfling (2) angebracht ist, und oberhalb des Prüflings eine Kamera (4) installiert ist, deren Objektiv auf den Prüfling gerichtet ist. Ober- und/oder unterhalb des Prüflings befindet sich eine Lichtquelle (3a, 3b), deren Licht auf den Prüfling gerichtet ist. Das von der Kamera (4) aufgenommene Bild wird digitalisiert und auf einen üblichen Datenverarbeitungsapparat (5), vorzugsweise einem handelsüblicher Personalcomputer übertragen, wo es von einer handelsüblichen Software für die Bildauswertung weiterverarbeitet wird. Der Computer befindet sich dabei vorzugsweise außerhalb der Messbox (1) und ist beispielsweise über ein Datenkabel mit der Kamera (4) innerhalb der Messbox (1) verbunden. Als Kamera eignen sich insbesondere sogenannte CCD-Kameras, die direkt ein digitales Bild erzeugen. Die Messbox (1) ist zur Vermeidung von Streulicht vorzugsweise mit einem schwarzen, lichtschluckenden Anstrich versehen.

Wesentlicher Aspekt bei dem vorliegenden erfindungsgemäßen Verfahren ist der Umstand, dass kein Spülgut wie Tassen, Besteck etc., eingesetzt wird, welches über eine unregelmäßige Form verfügt, sondern das nur ein plan ausgebildeter Prüfling eingesetzt wird, der aus dem zu untersuchenden Material besteht, oder dessen Oberfläche das zu untersuchende Material enthält. Der Prüfling wird vorzugsweise in eine Halterung eingesetzt. Diese kann beispielsweise aus Metall oder Kunststoff hergestellt werden. Die Halterung ist mit der Messbox verbunden, wobei die Halterung so ausgebildet werden kann, das der Prüfling leicht zugänglich ist und ebenso gewechselt werden kann. Vorzugsweise wird eine Halterung in Form einer Schublade ausgebildete, um ein einfaches Bedienen zu ermöglichen.

Das zu prüfenden Material wird vorzugsweise reversibel (z.B. durch eine Schraub- oder Schnappverbindung) in die Halterung eingesetzt. Dabei ist die Halterung so gestaltet, dass das Licht der Lichtquellen ungehindert sowohl von untern als auch von oben auf das in der Halterung der Prüflings befindliche Material gelangen kann. Bevorzugt sind daher solche Halterungen, die einen Rahmen bilden, wobei das zu prüfenden Material in die Aussparung der Halterung eingelegt und in geeigneter Form fixiert wird. Die Halterung ist vorzugsweise aus Metall oder einer Legierung hergestellt.

Der Prüfling hat vorzugsweise eine Fläche von 20 cm² bis zu 250 cm². Dabei kann der Prüfling rechteckig, quadratisch, rund oder elliptisch ausgebildet sein. Vorzugsweise ist der Prüfling aber rechteckig ausgebildet. Der Prüfling ist plan ausgebildet, d.h. er bildet eine ebene Fläche. Der Prüfling selber besteht aus einer glatten Oberfläche, wie sie typischerweise auch beim Geschirrspülen vorkommt, also Keramik, Porzellan, Glas, Kunststoffe oder Metalle. Es können aber auch andere plane Oberflächen, z.B. aus Beton oder Gesteinsoberflächen gemessen werden. Das Material des Prüflings muss dabei so fest sein, dass es sich während der Messung nicht verbiegt. Ausgenommen sind also insbesondere Flüssigkeiten oder Gele und solche Feststoffe die keine glatten Oberflächenausbilden, also beispielsweise Pulver, Stäube oder Granulate. Die im erfindungsgemäßen Verfahren verwendeten Oberflächen müssen über ein ausreichendes Reflektionsvermögen verfügen. Eine ideal reflektierende Oberfläche, bei der das gesamte einfallende Licht reflektiert wird, weißt ein Reflexionsvermögen von 1 auf. Reale Materialien haben Reflexionswerte von kleiner 1. Um im erfindungsgemäßen Verfahren eingesetzt zu werden ist es bevorzugt solche Materialien für den Prüfling auszuwählen, deren Reflexionsvermögen mindestens 0,5, vorzugsweise mindestens 0,6 beträgt. Ein bevorzugter Bereich liegt bei 0,6 bis 0,95.

Die Lichtquelle wird entweder ober- oder unterhalb des Prüfling, vorzugsweise innerhalb der Messbox, angebracht. Dabei kann die Lichtquelle fest oder beweglich (schwenkbar) angeordnet sein, um sie justieren zu können. Für die eigentliche Messung muss die Lichtquelle aber fest montiert sein. Für das erfindungsgemäße Verfahren wird vorzugsweise sichtbares Licht im Wellenlängenbereich von 380 bis 800 nm eingesetzt. Das Licht muss nicht monochromatisch vorliegen. Es kann also auch schmal- oder breitbandiges Licht unterschiedlicher Wellenlänge eingesetzt werden. Es ist aber prinzipiell auch möglich, das erfindungsgemäße Verfahren bei anderen Wellenlängen (z.B. IR oder UV-Licht) durchzuführen. Im Sinne der vorliegenden Erfindung ist aber das sichtbare Licht bevorzugt, da man einen Eindruck von der visuellen Empfindung erhalten möchte, die ein Mensch beim Anblick solcher Oberflächen hat. Lampen, die im erfindungsgemäßen Verfahren eingesetzt werden können, weisen vorzugsweise eine Helligkeit von 1000 cd/m² auf, wobei Lampen mit höherer Helligkeit, z.B. 1200 bis 1600 cd/m² bevorzugt sind. Die Art und Weise in der das Licht erzeugt wird, ist im Rahmen der vorliegenden technischen Lehre nicht kritisch. Im Verfahren ist die Kamera vorzugsweise so auszurichten, dass sie direkt die von der Oberfläche des Prüflings gestreute bzw. reflektierten Lichtstrahlen auffangen kann.

Bei dem erfindungsgemäße Verfahren können zwei bevorzugte Ausgestaltungen unterschieden werden, je nachdem, ob man vorzugsweise das "Spotting" oder das "Filming" messen will.

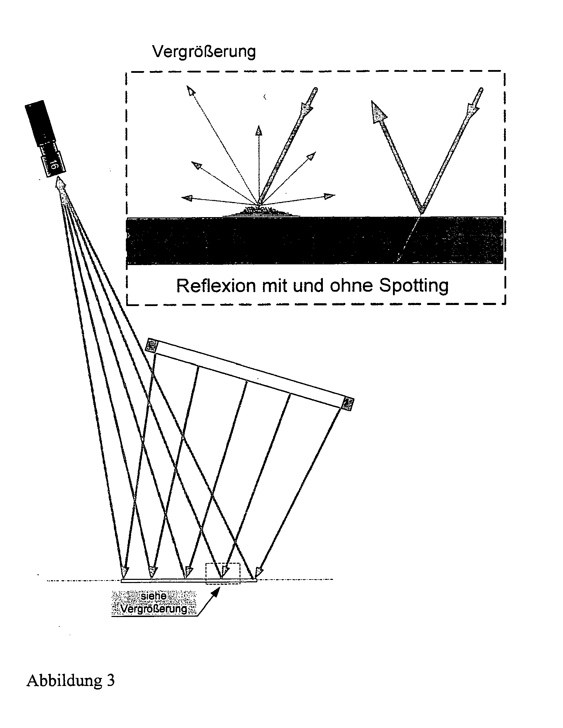

Bei der ersten Abwandlung handelt es sich um die Messung zur Ermittlung des sogenannten Spottings. Spotting entsteht durch abtrocknende, einzelne Wassertropfen. Die in den Wassertropfen enthaltenen Mineralien lagern sich nach dem Trocknen auf dem Spülgut ab und hinterlassen matte Flächen mit klarer Umgrenzung. Die vorliegende technische Lehre geht nun von der Erkenntnis aus, dass an den Ablagerungen das Licht einer Flächenbeleuchtung diffus gestreut wird, d. h. das nur noch ein Bruchteil des Lichtes auf einer Spotting-freien Fläche reflektiert wird und in das Objektiv der Kamera gelangt. Es entsteht dann das Bild eines hellen Objekts mit dunklen Flecken (vgl. dazu Abbildung 2). Durch eine digitale Bildanalyse kann die Intensität und ggf. Verteilung der Spotting-Bereiche gemessen und analysiert werden und dient so als Basis für die Beurteilung unterschiedlicher Klarspülmittel. Dabei geht das Verfahren zur Messung des Spottings im wesentlichen davon aus, dass in einer Messeinrichtung gemäß Abbildung 1 eine Flächenbeleuchtung oberhalb des Messprüflings angebracht ist, wobei der Winkel zwischen dem Lot und den einfallenden Lichtstrahlen vorzugsweise im Bereich von 2 bis 20° und insbesondere im Bereich von 10 bis 20 ° liegen sollte. Das von der Oberfläche des Prüflings reflektierte Licht wird von einer Kamera als Bild aufgefangen und einem Computer zu einer digitalen Bildanalyse zugeführt. Die Kamera ist dabei direkt auf das von der Oberfläche reflektierte Licht gerichtet., wobei die Kamera vorzugsweise den gleichen Winkel zum Lot aufweist, wie die Lampe, aber mit anderem Vorzeichen. Dies wird in der Abbildung 3 deutlich.

Die Oberfläche des Prüflings wird im spotting-losen Zustand vollständig von dem Objektiv der Kamera aufgenommen. Sofern auf der Oberfläche des Prüfling Spotting-Bereiche vorliegen, wird an diesen Ablagerungen das Bild der Flächenbeleuchtung diffus gestreut, d.h., dass nur noch ein Bruchteil des im spotting-losen Fall reflektierten Lichts in das Objektiv der Kamera gelangt (siehe Abbildung 3). Die digitale Bildverarbeitung sucht nun nach deutlichen Kanten der Spotting-Flächen (mittels der Funktionen Sobel-Filter, Kanten füllen, danach wird ein Binärbild generiert) und berechnet so anhand der gefundenen Kanten die eingeschlossenen Flächen. Anschließend werden diese Flächen in drei Größenklassen einsortiert. Als Messergebnis erhält man die prozentuale Spotting-Belastung in Bezug auf die Messfläche, unterteilt in mehrer Größenklassen.

Um den gesamten Prüfling abbilden zu können ist es bevorzugt eine Flächenbeleuchtung einzusetzen. Diese kann vorzugsweise eine Fläche von 40000 bis 100000 mm² aufweisen. Eine Leute dieses Typs (Phlox® Backlight) hat beispielweise eine leuchtende Fläche von 300 x 220 mm². Die erfindungsgemäß vorzugsweise verwendeten Flächenleuchten sollten vorzugsweise das Licht gleichmäßig über die ganze Fläche abstrahlen. Es kann vorteilhaft sein, die Helligkeit der Lampe stufenlos zu regulieren. Auch hier gilt, dass die Helligkeit der Lampe vorzugsweise 1000 cd/m² oder größer beträgt. Besonders bevorzugt sind flächige Lampen mit Helligkeiten von 1200 bis 1600 cd/m². Es kann vorteilhaft sein solche Lampen einzusetzen, deren Helligkeit frei einstellbar ist.

Die zweite Ausbildung der vorliegenden technischen Lehre betrifft die Messung des Filmings. Filming tritt auf, wenn ein dünner Wasserfilm gleichmäßig abtrocknet. Es entsteht dann eine dünne Schicht von Ablagerungen auf der Oberfläche des Prüfling, die aber nicht so klar abgegrenzt ist wie es bei Spotting-Flächen der Fall ist.

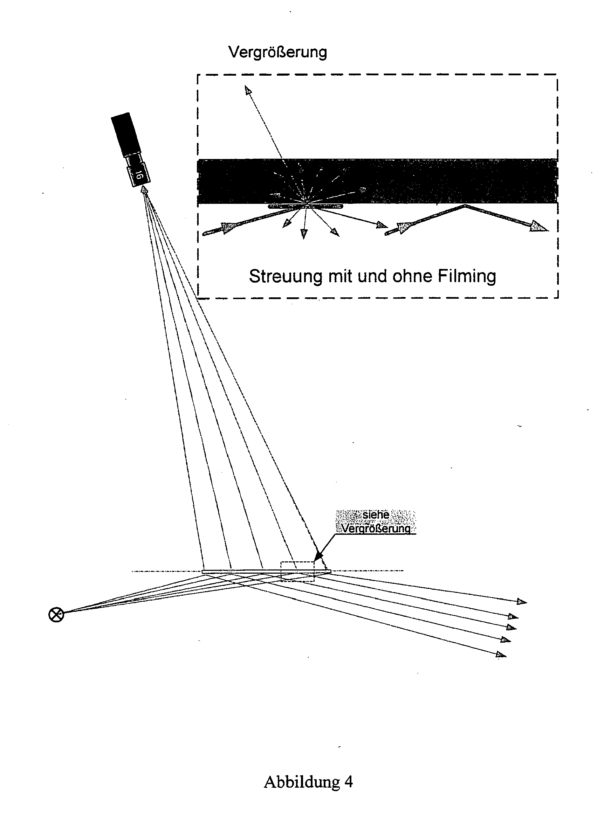

Demgemäss wird erfindungsgemäß ein Prüfling aus transparentem harten Material, vorzugsweise aus Glas verwendet. Dieser wird gemäß Abb. 1 von unten mit einer punktförmigen Lichtquelle bestrahlt, wobei, wie in Abbildung 4 schematisch dargestellt, das licht an der Oberfläche total reflektiert wird. Befindet sich aber eine Ablagerung auf der Oberfläche kommt es zu diffusen Streuung des Lichts. Dieses Streulicht wird von der Kamera aufgefangen und das so gewonnene Bild mittels einer digitalen Bildanalyse analysiert. Das entstehende Bild zeigt daher eine schwarze Oberfläche mit hellen Filming-Flächen. Mit Hilfe einer handelsüblichen digitalen Bildverarbeitung (z.B. das Programm Vision P400, Fa. Matsushita) können die Grauwerte dieses Bildes ausgewertet und die Vorkommen in Graustufen in mehrere Klassen unterteilt werden. Als Messgröße erhält man dann die prozentuale Belastung mit Filming in Bezug auf die Messwerte unterteilt in die Klassen.

Als Lampe können in dieser Ausgestaltung auch punktförmige Lichtquellen verwendet werden, z.B. übliche Halogenlampen. Zu Helligkeit und Lichtfarbe gilt, wie oben, das mindestens 1000 cd/m² vorliegen sollen und das sichtbares Licht bevorzugt ist.

Es ist möglich, eine erfindungsgemäße Vorrichtung einzusetzen, die nur zum Messung von Spotting oder von Filming ausgebildet ist, wobei es bevorzugt ist, solche Vorrichtungen zu verwenden, die Spotting und Filming messen können. Sofern z.B. beide Lichtquellen im Sinne der obigen Beschreibung in einer Messbox angeordnet sind, kann man dann hintereinander das Spotting und das Filming bestimmen.

Das erfindungsgemäße Verfahren kann vorzugsweise verwendet werden, um die Spotting- bzw. Filming-Eigenschaften von Reinigungsmitteln (oder anderen Tensid-haltigen wässerigen Mitteln) zu testen bzw. zu bewerten. Dazu werden die Prüflinge einer Reinigung unterworfen, wobei z.B. verschiedene Reinigungsmittel und/oder Dosierungen derselben benutzt werden. Dazu werden die Prüflinge mit wässerigen Lösungen geeigneter Reinigungsmittel in Kontakt gebracht. bevorzugt ist es, Prüflinge in einer Geschirrspülmaschine zu reinigen. Anschließend werden die Prüflingen hintereinander durch das erfindungsgemäße Verfahren gemessen. Die vorliegende technische Lehre schließt es auch ein, die Messung durch geeignete Vorrichtungen weitgehend zu automatisieren, indem beispielsweise mehre Prüflinge hintereinander gemessen werden.

### Beispiele

### Filming-Messung

Eine gespülte Glasplatte (Prüfling) mit den Abmessungen von 15*20 cm wird für die Filmingdetektion von einer Halogenkaltlichtlampe (12Volt; 20 Watt; Abstrahlwinkel von 15°) aus ca. 50 cm in einem Spitzen Winkel von 10° von unten mit Streiflicht beleuchtet. Zur Bilderfassung wird die gleiche CCD-Kamera mit Objektiv benutzt. Die Kamera befindet sich dabei am gleichen Ort wie für die Spottingdetektion.Filming auf der Glasoberfläche bewirkt eine diffuse Streuung des Lichtes. Ein Bruchteil des Lichtes wird in Richtung Kamera gelenkt und gelangt durch die Glasplatte ins Objektiv. Filming bewirkt in der Abbildung auf dem CCD-Chip der Kamera eine Kontraständerung. Das entstandene Grauwertbild wird mit Hilfe der digitalen Bildauswertung analysiert. Die Grauwerte werden in Klassen einsortiert und als Filming-Messgröße ausgegeben.

Eine Glasplatte wurden einmal mit dem Produkt A, einem herkömmlicher Klarspüler und unabhängig davon mit dem Produkt B, einem handelsüblichen multifunktionellen Reiniger mit integriertem Klarspüler (sogenannter "3 in 1 Tab") in einem Geschirrspülautomaten gereinigt. Anschließend wurde die Glasplatte jeweils im erfindungsgemäßen Verfahren bewertet. Die Ergebnisse finden sich in der folgenden Tabellen 1. Aufgeführt ist jeweils in % der gesamte prozentuale Anteil an Filming.

**Tabelle 1**

| | Filming, schwach [%] | Filming, mittel[%] | Filming, stark [%] |
|---|---|---|---|
| Produkt A | 6,61 | 33,67 | 53,71 |
| Produkt B | 49,74 | 12,26 | 0,33 |

## Patentansprüche

1. Verfahren zur quantitativen Messung von Filming-Ablagerungen, bestehend aus mineralischen Verbindungen oder um Tensidrückstände, auf Glasoberflächen wobei die Oberfläche zur Messung als planer Prüfling ausgebildet ist, vorzugsweise in Form einer rechteckigen oder runden Platte und der Prüfling mit sichtbarem Licht aus einer Lichtquelle bestrahlt wird, **dadurch gekennzeichnet, dass** die Lichtquelle unterhalb der zu messenden Oberfläche angebracht ist, wobei die Kamera oberhalb der Oberfläche positioniert ist und das bei der Durchleuchtung der zu messenden Oberfläche diffus gestreute Licht auffängt, wobei das gestreute Licht digitalisiert wird und auf einen Personalcomputer übertragen wird und das digitalisierte Bild dort von einer Software ausgewertet wird, wobei durch die digitale Bildanalyse die Grauwerte des Bildes ausgewertet und in mehrere Klassen der prozentuale Filming-Belastung ermittelt wird.
